# FASCICULE DE BREVET EUROPEEN

(11) **EP 3 594 091 B1**
(45) Date de publication et mention de la délivrance du brevet: **03.08.2022**
(21) Numéro de dépôt: 19180462.4
(22) Date de dépôt: 17.06.2019
(51) Int. Cl.: B62D 15/02, G06K 9/00

(54) **PROCÉDÉ ET DISPOSITIF DE DÉTECTION ET D'INHIBITION DE TOUT DÉPLACEMENT NON SOUHAITÉ D'UN VÉHICULE AUTOMOBILE INTÉGRÉ DANS UN SYSTÈME D'AIDE AU STATIONNEMENT**
VERFAHREN UND VORRICHTUNG ZUR ERKENNUNG UND VERHINDERUNG JEDER UNERWÜNSCHTEN BEWEGUNG EINES KRAFTFAHRZEUGS, DAS IN EIN EINPARKHILFSSYSTEM INTEGRIERT IST
METHOD AND DEVICE FOR DETECTING AND INHIBITING ANY UNDESIRED MOVEMENT OF A MOTOR VEHICLE INTEGRATED IN A PARKING ASSISTANCE SYSTEM

(30) Priorité: 09.07.2018 FR 1856286
(43) Date de publication de la demande: 15.01.2020
(73) Titulaire: Renault s.a.s, 92100 Boulogne Billancourt (FR)
(72) Inventeur: SENE, Pape Abdoulaye, 78000 VERSAILLES (FR); GUERPILLON, Mathieu, 78280 Guyancourt (FR)
(74) Mandataire: Renault Group

(56) Documents cités:
- EP-A1- 2 933 152
- EP-A2- 0 849 142

## Description

La présente invention concerne le domaine d'aides à la conduite d'un véhicule automobile, et notamment les aides au stationnement.

Plus particulièrement, l'invention concerne les procédés et systèmes d'aide au stationnement entièrement automatisés ou semi-automatisés pour la réalisation des manœuvres de stationnement, par exemple de type créneau.

De tels procédés et systèmes d'aide au stationnement permettent la détection d'une place de stationnement puis prennent le contrôle sur la direction assistée électrique du véhicule afin de réaliser la manœuvre de stationnement. L'opération de braquage des roues en vue de la manœuvre de stationnement est ainsi entièrement réalisée de manière automatique.

Le conducteur du véhicule reste responsable du changement de rapport, de l'accélération et du freinage du véhicule.

Toutefois, dans de tels procédés, l'accélération est sous l'entière responsabilité du conducteur. Il existe alors un risque que le véhicule roule à une vitesse excessive pouvant engendrer la collision avec des obstacles fixes ou mobiles se trouvant à proximité du véhicule. De plus, la détection d'obstacles, le freinage et l'immobilisation du véhicule sont également sous le contrôle exclusif du conducteur.

De plus, de tels procédés et systèmes d'aide à la conduite génèrent un manque de vigilance de la part du conducteur du véhicule, ainsi qu'une certaine anxiété pour les conducteurs qui souhaitent garder un contrôle sur le véhicule. Ces deux comportements du conducteur peuvent entraîner des problèmes de sécurité.

Enfin, dans certaines conditions, notamment en pente, et en fonction des actions du conducteur, le véhicule automobile est susceptible de se déplacer dans une direction opposée à la direction attendue. Ce phénomène est connu sous le nom de « rollback » en termes anglo-saxons. Un tel phénomène peut entraîner une collision avec un obstacle situé à l'arrière du véhicule automobile.

On peut se référer au document KR101606390 - A1 (Hyundai) qui décrit un système d'aide au stationnement en pente basé sur l'orientation des roues en fin de manœuvre de stationnement et configuré pour empêcher le véhicule automobile de descendre la pente.

Toutefois, un tel système ne concerne pas les systèmes d'aide au stationnement.Le document EP0849142 décrit un appareil pour empêcher un véhicule de se déplacer dans une direction opposée à une direction indiquée par le levier de vitesse, toutefois il ne permet pas d'inhiber tout déplacement non souhaité Le document EP0849142 est considéré comme l'art antérieur le plus proche, il divulgue notamment un dispositif de détection de tout déplacement non souhaité d'un véhicule automobile comprenant un module de calcul du sens de marche souhaité, en fonction d'informations de la trajectoire, des informations de réalisation de la manoeuvre de stationnement, ainsi que du rapport engagé, un module de calcul du sens de marche réel basé sur l'odométrie du véhicule et un module de détection de tout déplacement non souhaité du véhicule automobile configuré pour comparer le sens de marche voulu avec le sens de marche réel et déterminer si le véhicule se déplace dans une direction non souhaitée en fonction de ladite comparaison.

Le document EP2933152 décrit un dispositif d'aide au stationnement dont le guidage n'est pas réalisé lorsqu'un déplacement du véhicule est détecté pendant la période de manœuvre de stationnement, cependant il ne prend pas en charge toutes les fonctions du véhicule.

Il existe un besoin d'améliorer les procédés et systèmes d'aide à la conduite afin de d'éviter tout déplacement du véhicule dans une direction non souhaitée.

En effet, les systèmes d'aide au stationnement ne prennent pas en charge toutes les fonctions du véhicule, laissant une certaine responsabilité au client. Cette cohabitation ADAS/conducteur peut conduire à des situations dangereuses.

Le but de l'invention est donc de limiter de telles situations.

La présente invention a pour objet un dispositif de détection et d'inhibition de tout déplacement non souhaité d'un véhicule automobile comprenant un module de calcul du sens de marche souhaité, en fonction d'informations de la trajectoire calculée par un module de détection des places de stationnement du système d'aide au stationnement, des informations de réalisation de la manœuvre de stationnement, ainsi que du rapport engagé.

Le dispositif comprend en outre un module de calcul du sens de marche réel basé sur l'odométrie du véhicule et un module de détection de tout déplacement non souhaité du véhicule automobile configuré pour comparer le sens de marche voulu avec le sens de marche réel et déterminer si le véhicule se déplace dans une direction non souhaitée en fonction de ladite comparaison.

La trajectoire est, par exemple, calculée par un module de détection des places de stationnement du système d'aide au stationnement,

En effet, à basse vitesse, la vitesse du véhicule n'est pas fournie par les capteurs de vitesse des quatre roues du véhicule. La vitesse du véhicule est généralement considérée comme nulle dès qu'elle devient inférieure à une valeur de seuil. Ainsi, on utilise des capteurs de sens de marche installés notamment sur les roues non directrices et de capteurs de « tops roue » installés sur les quatre roues.

L'appellation « top roue » fait référence à la sortie d'un encodeur situé au niveau de la roue du véhicule et qui s'incrémente tous les X degrés de rotation de la roue. La valeur X dépend du véhicule et de la taille de la roue. Cet encodeur fait partie de l'odométrie du véhicule et il en existe un sur chaque roue. A chaque rotation de X degrés, on a un « top roue » de plus.

Ainsi, le module de calcul du sens de marche réel détermine le sens de marche réel en fonction des capteurs de sens de marche, des capteurs de « tops roues » et de l'accélération du véhicule provenant de l'accéléromètre du véhicule.

Avantageusement, lorsque les sens de marche sont différents, un déplacement non souhaité du véhicule est détecté, un compteur du nombre de tops roues vu par les capteurs d'odométrie est lancé, le dispositif comprenant un comparateur configuré pour comparer le nombre de top roues compté avec une première valeur de seuil, si le nombre de tops roues est supérieur à ladite première valeur de seuil, le freinage du véhicule est activé.

Selon un autre mode de réalisation, un estimateur de distance parcourue basé sur l'odométrie et/ou les capteurs de perception du véhicule, peut être lancé après détection d'une différence de sens de marche. Ce dispositif comprend également un comparateur configuré pour comparer la distance parcourue avec une valeur de seuil de distance, si la distance parcourue est supérieure audit seuil de distance, le freinage du véhicule est activé.

Le freinage du véhicule s'appuie sur un régulateur de décélération configuré pour réguler le couple de freinage à la roue jusqu'à ce que le véhicule soit arrêté et qu'aucun top roue ne soit détecté.

Le dispositif peut comprendre un module de maintien à l'arrêt du véhicule configuré pour envoyer une requête au système de freinage pour activer une fonction de maintien.

Avantageusement, le dispositif comprend un compteur de mouvement non souhaité (rollback) configuré pour s'incrémenter à chaque fois qu'un mouvement non souhaité est détecté.

Ainsi, lorsque le nombre maximal de mouvements non souhaité est détecté pour une manœuvre donnée, un ordre d'annulation de la manœuvre de stationnement est envoyé au module de réalisation de la manœuvre de stationnement, lequel peut informer le conducteur au travers de l'interface homme-machine.

Selon un second aspect, l'invention concerne un système d'aide au stationnement d'un véhicule automobile permettant le stationnement du véhicule depuis une voie de circulation vers un emplacement libre de stationnement, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur odométrique, un accéléromètre, un moyen d'activation d'une fonction de pilotage automatique et une pédale d'accélération.

Le système d'aide au stationnement comprend :
- un module de détection de l'activation d'une phase de recherche d'une place de stationnement apte à vérifier que le conducteur a appuyé sur un organe de commande afin d'activer la fonction de recherche de place de stationnement,
- un module de vérification des conditions pour démarrer la manœuvre de stationnement,
- un module de vérification de l'enfoncement de la pédale d'accélération afin de confirmer le début du mouvement et un module de réalisation de la manœuvre de stationnement qui met le véhicule en mouvement lorsque la pédale d'accélération est enfoncée et régule la vitesse par un module de régulation de vitesse, et
- un dispositif de détection et d'inhibition de tout déplacement non souhaité d'un véhicule automobile tel que décrit précédemment.

En variante, le module de vérification de l'enfoncement de la pédale d'accélération n'inclut pas la condition d'appui continue sur la pédale d'accélération pour lancer la régulation et la mise en mouvement du véhicule selon un principe homme-mort. L'enfoncement initial de la pédale d'accélération permet d'acquitter le début du mouvement.

Avantageusement, le dispositif de détection et d'inhibition de tout déplacement non souhaité comprend un module de vérification de l'état du module de régulation de vitesse permettant de s'assurer que le véhicule est bien en mouvement semi-automatisé.

Selon un troisième aspect, l'invention concerne un procédé de détection et d'inhibition de tout déplacement non souhaité du véhicule automobile dans lequel on calcule le sens de marche souhaité en fonction d'informations de la trajectoire, des informations sur la réalisation de la manœuvre de stationnement, ainsi que du rapport engagé et le sens de marche réel, basé sur l'odométrie du véhicule et on tout déplacement non souhaité du véhicule automobile en comparant le sens de marche voulu avec le sens de marche réel afin de déterminer si le véhicule se déplace dans une direction non souhaitée en fonction de ladite comparaison.

Avantageusement, lorsque les sens de marche sont différents, un déplacement non souhaité du véhicule est détecté, un compteur du nombre de tops roues vu par les capteurs d'odométrie est lancé, et on compare le nombre de top roues compté avec une première valeur de seuil, si le nombre de tops roues est supérieur à ladite première valeur de seuil, on active le freinage du véhicule.

Par exemple, lorsque le freinage est activé, on maintient à l'arrêt du véhicule.

Avantageusement, on incrémente un compteur de mouvement non souhaité (rollback) configuré pour s'incrémenter à chaque fois qu'un mouvement non souhaité est détecté.

Ainsi, lorsque le nombre maximal de mouvements non souhaité est détecté pour une manœuvre donnée, un ordre d'annulation de la manœuvre de stationnement est envoyé au module de réalisation de la manœuvre de stationnement, lequel peut informer le conducteur au travers de l'interface homme-machine.

A chaque nouvelle manœuvre, on réinitialise le compteur de rollback.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente schématiquement un système d'aide au stationnement d'un véhicule automobile selon l'invention ;
- la figure 2 illustre en détails le module de détection et d'inhibition de tout déplacement non souhaité du véhicule automobile du système d'aide au stationnement de la figure 1 ;

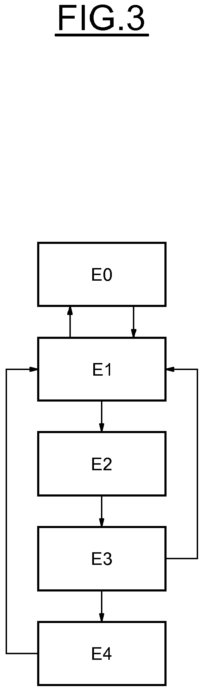

- la figure 3 illustre les états du système d'aide au stationnement selon la figure 1 ; et
- la figure 4 illustre les étapes d'un procédé de détection et d'inhibition de tout déplacement non souhaité du véhicule automobile selon l'invention mis en œuvre par le système d'aide au stationnement de la figure 1.

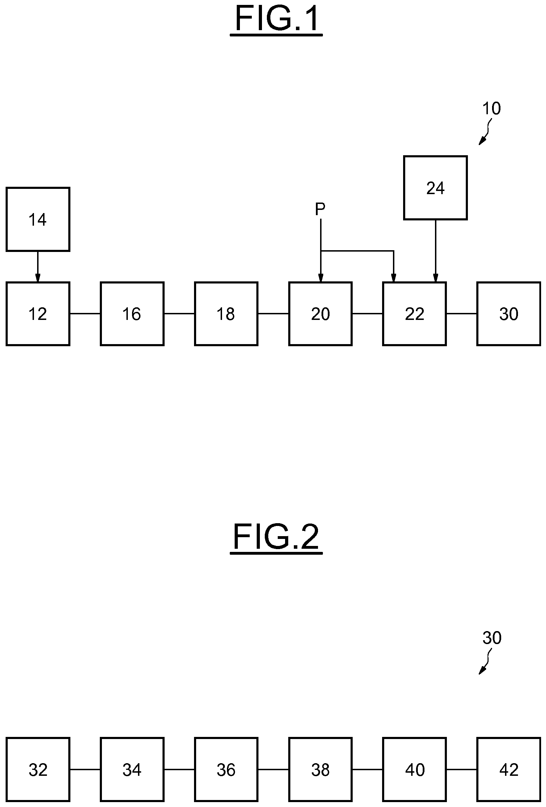

Sur la figure 1, on a représenté de manière très schématique un système 10 d'aide à la conduite et notamment au stationnement d'un véhicule automobile (non représenté). Le véhicule automobile comprend les éléments suivants qui ne sont pas représentés sur les figures pour plus de clarté : un système de détection d'obstacles situés à proximité du véhicule, par exemple à une distance inférieure à 2m, un système de détection de places de stationnement, une direction assistée électrique pilotable en angle de braquage, un moteur et un système de freinage tous les deux pilotables en couple répondant à des demandes d'accélération et de freinage, une boîte de vitesse automatique ou un système dit «shift by wire », au moins un capteur odométrique, un accéléromètre, une interface visuelle et sonore, un moyen d'activation d'une fonction pilotage automatique ou « homme-mort », et une pédale d'accélération, ainsi qu'un capteur d'enfoncement de ladite pédale d'accélération.

Le système 10 d'aide au stationnement permet le stationnement du véhicule depuis une voie de circulation vers un emplacement libre de stationnement. Le système 10 d'aide au stationnement permet de commander le moteur, les freins, la direction, ainsi que la boîte de vitesse automatique.

Le système 10 d'aide au stationnement comprend un module 12 de détection de l'activation d'une phase de recherche d'une place de stationnement. Le module 12 de détection vérifie que le conducteur a appuyé sur un organe de commande 14, par exemple un bouton présent sur le tableau de bord du véhicule afin d'activer la fonction de recherche de place de stationnement. Lorsque le conducteur active la fonction de recherche de place de stationnement, le module 12 de détection détecte une ou plusieurs places de stationnement à proximité du véhicule et les affiche, par exemple sur une interface homme-machine (non représentée). Lors de cette phase de recherche, le système 10 d'aide au stationnement est à l'état E0, non actif, c'est-à-dire qu'aucun pilotage n'est réalisé sur les actionneurs. Le conducteur du véhicule reste entièrement responsable de son véhicule.

On pourrait également prévoir que le module 12 détecte des places de stationnement sans les proposer au conducteur avant que le conducteur n'appuie sur le bouton de commande 14 afin de pouvoir proposer au conducteur les places détectées dès qu'il appuie sur l'organe de commande 14.

L'interface homme-machine (non représentée) du véhicule invite ensuite le conducteur à avancer jusqu'à la détection d'une place de stationnement puis à enclencher la marche arrière.

Le système 10 d'aide au stationnement comprend un module 16 de vérification des conditions pour démarrer la manœuvre de stationnement. Une fois la place de stationnement validée par le conducteur, et lorsque les conditions nécessaires pour engager la manœuvre sont réunies, c'est-à-dire, qu'une place de stationnement est trouvée, que le véhicule est dans la bonne position pour effectuer la manœuvre de stationnement, que le véhicule est à l'arrêt et que les feux clignotants sont actionnés, le système d'aide au stationnement est prêt pour engager la manœuvre de stationnement et passe à un état E1, correspondant à une phase d'attente du début de la manœuvre. Le conducteur doit alors confirmer la manœuvre par, par exemple, un appui sur le même organe de commande 14 que la détection de place, ou un autre organe de commande.

Le système 10 peut comprendre en outre un module 18 de découplage entre le moteur et la pédale d'accélération, de sorte qu'une fois la manœuvre de stationnement validée, et pendant toute la durée de la manœuvre de stationnement, le moteur ne prend plus en compte les consignes d'accélération transmises par la pédale d'accélération, mais uniquement les consignes d'accélération envoyées par un module 24 de régulation de vitesse du système 10 d'aide au stationnement.

Pour débuter la manœuvre de stationnement, le système 10 comprend un module 20 de vérification de l'enfoncement de la pédale P d'accélération. Ainsi, la manœuvre de stationnement ne démarre que si le conducteur appuie sur la pédale P d'accélération et maintient cet appui. La pédale d'accélération P a le rôle d'un moyen de commande « homme-mort ».

Dans une autre réalisation, le module 20 de vérification de l'enfoncement de la pédale d'accélération n'inclut pas la condition d'appui continue sur la pédale d'accélération pour lancer la régulation et la mise en mouvement du véhicule selon un principe homme-mort. L'enfoncement initial de la pédale d'accélération permet d'acquitter le début du mouvement.

En cas de stationnement par créneau, le conducteur doit engager la marche arrière. Lorsque la marche arrière est engagée et que le conducteur transmet l'ordre de démarrer la manœuvre de stationnement au système d'aide au stationnement, celui-ci passe à l'état E2, correspondant à une phase d'annulation de l'accélération.

Le système 10 comprend à cet effet un module 22 de réalisation de la manœuvre de stationnement qui met le véhicule en mouvement lors de l'état E2 et régule la vitesse par un module 24 de régulation de vitesse lors d'un état E3.

A la fin du mouvement, et sans interruption de l'état E3, le système d'aide au stationnement passe à l'état E4 correspondant à la phase d'activation du freinage.

Lors de l'état E3 de régulation de vitesse, le système 10 est configuré pour détecter et inhiber tout déplacement non souhaité du véhicule automobile.

Dans une autre réalisation de notre système 10, le début de la manœuvre est uniquement conditionné par un premier enfoncement de la pédale P d'accélération. Le maintien durant tout le mouvement de cette dernière n'est pas requis dans la mesure où il n'y a pas de système homme-mort via la pédale P. Le conducteur peut ou pas appuyer sur celle-ci durant le mouvement. Le module 22 de réalisation de la manœuvre de stationnement va, dans ce cas, assurer à tout moment la régulation de la vitesse du véhicule en sélectionnant la consigne d'accélération pour le moteur permettant de suivre un profil de vitesse prédéterminé tout en évitant toute suraccélération.

Le système 10 comprend à cet effet un dispositif 30 d'inhibition de tout déplacement non souhaité du véhicule automobile permettant d'appréhender en temps réel toute situation de déplacement du véhicule dans une direction non souhaitée dite « rollback » nécessitant un arrêt immédiat du véhicule, notamment à faible vitesse.

Le dispositif 30 d'inhibition de tout déplacement non souhaité du véhicule automobile comprend un module 32 de vérification de l'état du module 24 de régulation de vitesse permettant de s'assurer que le véhicule est bien en mouvement semi-automatisé.

Le dispositif 30 d'inhibition comprend en outre un module 34 de calcul du sens de marche souhaité, en fonction d'informations de la trajectoire calculée par le module 12 de détection des places de stationnement, des informations du module 22 de réalisation de la manœuvre de stationnement, ainsi que du rapport engagé.

Par exemple, s'il reste 5 mètres à parcourir, que le module 22 de réalisation de la manœuvre de stationnement est activé et que le rapport engagé est « marche avant » ou « drive » en termes anglo-saxons est actionné, le sens de déplacement du véhicule est « avance ».

Le dispositif 30 d'inhibition comprend également un module 36 de calcul du sens de marche réel basé sur l'odométrie du véhicule.

En effet, à basse vitesse, la vitesse du véhicule n'est pas fournie par les capteurs de vitesse des quatre roues du véhicule. La vitesse du véhicule est généralement considérée comme nulle dès qu'elle devient inférieure à une valeur de seuil. Ainsi, on utilise des capteurs de sens de marche installés notamment sur les roues non directrices et de capteurs de « tops roues » installés sur les quatre roues.

L'appellation « top roues » fait référence à la sortie d'un encodeur situé au niveau de la roue du véhicule et qui s'incrémente tous les X degrés de rotation de la roue. La valeur X dépend du véhicule et de la taille de la roue. Cet encodeur fait partie de l'odométrie du véhicule et il en existe un sur chaque roue. A chaque rotation de X degrés, on a un « top roue» de plus.

Ainsi, le module 36 de calcul du sens de marche réel détermine le sens de marche réel en fonction des capteurs de sens de marche, des capteurs de « tops roues » et de l'accélération du véhicule provenant de l'accéléromètre du véhicule.

Le dispositif 30 d'inhibition comprend un module 38 de détection de tout déplacement non souhaité du véhicule automobile configuré pour comparer le sens de marche voulu issu du module 34 avec le sens de marche réel issu du module 36. Si les sens de marche sont identiques, aucun rollback n'est détecté et on revient au module 32 de vérification de l'état du module 24 de régulation de vitesse. A l'inverse, si les sens de marche sont différents, un déplacement non souhaité du véhicule (rollback) est détecté, un compteur du nombre de tops roues vu par les capteurs d'odométrie est lancé. L'état E3 est continué si aucune action n'est initiée par le conducteur et que le nombre de tops roues est inférieur à une première valeur de seuil S1. Si, par contre le nombre de tops roues est supérieur à la première valeur de seuil S1, le système passe à l'état E4 de freinage du véhicule.

Le freinage du véhicule s'appuie sur un régulateur de décélération (non représenté) configuré pour réguler le couple de freinage à la roue jusqu'à ce que le véhicule soit arrêté et qu'aucun top roue ne soit détecté. Le dispositif 30 comprend alors un module 40 de maintien à l'arrêt du véhicule configuré pour envoyer une requête au système de freinage pour activer la fonction de maintien.

Dans une autre réalisation, un estimateur de distance parcourue basé sur l'odométrie et/ou les capteurs de perception du véhicule, peut être lancé après détection d'une différence de sens de marche. Ce dispositif comprend également un comparateur configuré pour comparer la distance parcourue avec une valeur de seuil de distance, si la distance parcourue est supérieure audit seuil de distance, le freinage du véhicule est activé.

Le dispositif 30 comprend également un compteur 42 de rollback configuré pour s'incrémenter à chaque fois qu'un mouvement non souhaité est détecté. Ainsi, lorsque le nombre maximal de mouvement non souhaité est détecté pour une manœuvre donnée, un ordre d'annulation de la manœuvre de stationnement est envoyé au module 22 de réalisation de la manœuvre de stationnement, lequel peut informer le conducteur au travers de l'interface homme-machine.

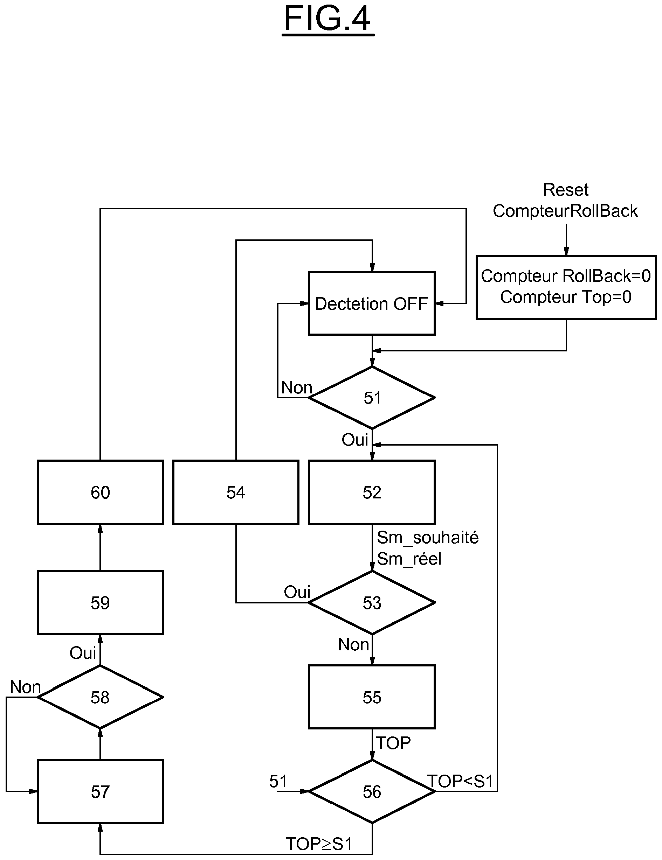

La figure 4 représente un organigramme de mise en œuvre d'un procédé de détection et d'inhibition de tout déplacement non souhaité du véhicule automobile selon l'invention mis en œuvre par le système d'aide au stationnement de la figure 1. Le procédé de détection et d'inhibition de tout déplacement non souhaité est mis en œuvre lors de l'état E3 de régulation de la vitesse par le module 24.

Le procédé 50 comprend une étape 51 de vérification de l'état du module 24 de régulation de vitesse permettant de s'assurer que le véhicule est bien en mouvement semi-automatisé.

Le procédé 50 comprend une étape 52 de calcul du sens de marche souhaité Sm souhaité et du sens de marche réel Sm réel. Le sens de marche Sm_souhaité est déterminé en fonction d'informations de la trajectoire calculée par le module 12 de détection des places de stationnement, des informations du module 22 de réalisation de la manœuvre de stationnement, ainsi que du rapport engagé.

Par exemple, s'il reste 5 mètres à parcourir, que le module 22 de réalisation de la manœuvre de stationnement est activé et que le rapport engagé est « marche avant » ou « drive » en termes anglo-saxons est actionné, le sens de déplacement du véhicule est « avance ».

Le sens de la marche réel Sm_réel est basé sur l'odométrie du véhicule.

En effet, à basse vitesse, la vitesse du véhicule n'est pas fournie par les capteurs de vitesse des quatre roues du véhicule. La vitesse du véhicule est généralement considérée comme nulle dès qu'elle devient inférieure à une valeur de seuil. Ainsi, on utilise des capteurs de sens de marche installés notamment sur les roues non directrices et de capteurs de « tops roues » installés sur les quatre roues.

L'appellation « top roues » fait référence à la sortie d'un encodeur situé au niveau de la roue du véhicule et qui s'incrémente tous les X degrés de rotation de la roue. La valeur X dépend du véhicule et de la taille de la roue. Cet encodeur fait partie de l'odométrie du véhicule et il en existe un sur chaque roue. A chaque rotation de X degrés, on a un « top roue» de plus.

On détermine le sens de marche réel en fonction des capteurs de sens de marche, des capteurs de « tops roues » et de l'accélération du véhicule provenant de l'accéléromètre du véhicule.

On compare, à l'étape 53, le sens de marche voulu avec le sens de marche réel. Si les sens de marche sont identiques, aucun rollback n'est détecté et on revient à l'étape 51 et on réinitialise à l'étape 54 un compteur de top roues ou dans une autre réalisation l'estimateur de distance parcourue basée sur l'odométrie du véhicule ou les capteurs de perception.

A l'inverse, si les sens de marche sont différents, un déplacement non souhaité du véhicule (rollback) est détecté, on compte, à l'étape 55 le nombre de tops roues Top vu par les capteurs d'odométrie est lancé. L'état E3 est continué si aucune action n'est initiée par le conducteur et que le nombre de tops roues Top est inférieur à une première valeur de seuil S1, vérifié à l'étape 56. Si, par contre le nombre de tops roues Top est supérieur à la première valeur de seuil S1, on active, à l'étape 57, le freinage du véhicule.

Le freinage du véhicule s'appuie sur un régulateur de décélération (non représenté) configuré pour réguler le couple de freinage à la roue jusqu'à ce que le véhicule soit arrêté et qu'aucun top roue ne soit détecté à l'étape 58.

A l'étape 59, on envoie une requête au système de freinage pour activer la fonction de maintien.

A l'étape 60, on incrémente un compteur 42 de rollback configuré pour s'incrémenter à chaque fois qu'un mouvement non souhaité est détecté. Ainsi, lorsque le nombre maximal de mouvement non souhaité est détecté pour une manœuvre donnée, un ordre d'annulation de la manœuvre de stationnement est envoyé au module 22 de réalisation de la manœuvre de stationnement, lequel peut informer le conducteur au travers de l'interface homme-machine.

A chaque nouvelle manœuvre, on réinitialise le compteur de rollback.

Grâce au dispositif et au procédé de détection et d'inhibition de tout déplacement non souhaité du véhicule automobile lors de l'aide au stationnement, on appréhende en temps réel toute situation de déplacement du véhicule dans une direction non souhaitée dite « rollback » nécessitant un arrêt immédiat du véhicule, notamment à faible vitesse.

## Revendications

1. Système (10) d'aide au stationnement d'un véhicule automobile permettant le stationnement du véhicule depuis une voie de circulation vers un emplacement libre de stationnement, ledit véhicule automobile comprenant un système de détection d'obstacles, un système de détection de places de stationnement, une direction assistée électrique pilotable en angle de braquage, un moteur et un système de freinage pilotables en couple, une boîte de vitesse automatique ou un système dit «shift by wire », au moins un capteur odométrique, un accéléromètre, un moyen d'activation d'une fonction de pilotage automatique et une pédale d'accélération (P), le système d'aide au stationnement comprenant :
- un module (12) de détection de l'activation d'une phase de recherche d'une place de stationnement apte à vérifier que le conducteur a appuyé sur un organe de commande (14) afin d'activer la fonction de recherche de place de stationnement,
- un module (16) de vérification des conditions pour démarrer la manœuvre de stationnement
- un module (20) de vérification de l'enfoncement de la pédale (P) d'accélération et module (22) de réalisation de la manœuvre de stationnement qui met le véhicule en mouvement et régule la vitesse par un module (24) de régulation de vitesse, et
- un dispositif (30) de détection et d'inhibition de tout déplacement non souhaité d'un véhicule automobile comprenant un module (34) de calcul du sens de marche souhaité (Sm_souhaité), en fonction d'informations de la trajectoire, des informations de réalisation de la manœuvre de stationnement, ainsi que du rapport engagé, un module (36) de calcul du sens de marche réel (Sm_réel) basé sur l'odométrie du véhicule et un module (38) de détection de tout déplacement non souhaité du véhicule automobile configuré pour comparer le sens de marche voulu (Sm_souhaité) avec le sens de marche réel (Sm_réel) et déterminer si le véhicule se déplace dans une direction non souhaitée en fonction de ladite comparaison.

2. Système (10) d'aide au stationnement selon la revendication 1, lorsque les sens de marche sont différents, un déplacement non souhaité du véhicule est détecté, un compteur du nombre de tops roues vu par les capteurs d'odométrie est lancé, le dispositif comprenant un comparateur configuré pour comparer le nombre de top roues (Top) compté avec une première valeur de seuil, si le nombre de tops roues (Top) est supérieur à ladite première valeur de seuil (S1), le freinage du véhicule est activé.

3. Système (10) d'aide au stationnement selon la revendication 2, comprenant un module (40) de maintien à l'arrêt du véhicule configuré pour envoyer une requête au système de freinage pour activer une fonction de maintien.

4. Système (10) d'aide au stationnement selon la revendication 2 ou 3, comprenant un compteur (42) de mouvement non souhaité (rollback) configuré pour s'incrémenter à chaque fois qu'un mouvement non souhaité est détecté.

5. Système (10) d'aide au stationnement selon l'une quelconque des revendication 1 à 4, dans lequel le module (22) de réalisation de la manœuvre met le véhicule en mouvement lorsque la pédale (P) d'accélération est enfoncée.

6. Système (10) d'aide au stationnement selon l'une quelconque des revendication 1 à 5, dans lequel le dispositif (30) de détection et d'inhibition de tout déplacement non souhaité comprend un module (32) de vérification de l'état du module (24) de régulation de vitesse permettant de s'assurer que le véhicule est bien en mouvement semi-automatisé.

7. Procédé d'aide au stationnement d'un véhicule automobile permettant le stationnement du véhicule depuis une voie de circulation vers un emplacement libre de stationnement, le procédé d'aide au stationnement comprenant :
- une étape de détection de l'activation d'une phase de recherche d'une place de stationnement apte à vérifier que le conducteur a appuyé sur un organe de commande afin d'activer la fonction de recherche de place de stationnement,
- une étape de vérification des conditions pour démarrer la manœuvre de stationnement
- une étape de vérification de l'enfoncement de la pédale (P) d'accélération et une étape de réalisation de la manœuvre de stationnement qui met le véhicule en mouvement et régule la vitesse par une étape de régulation de vitesse, et
- un procédé (50) de détection et d'inhibition de tout déplacement non souhaité du véhicule automobile dans lequel on calcule le sens de marche souhaité (Sm_souhaité) en fonction d'informations de la trajectoire, des informations de la réalisation de la manœuvre de stationnement, ainsi que du rapport engagé et le sens de marche réel (Sm_réel), basé sur l'odométrie du véhicule et on détecte tout déplacement non souhaité du véhicule automobile en comparant le sens de marche voulu (Sm_souhaité) avec le sens de marche réel (Sm_réel) afin de déterminer si le véhicule se déplace dans une direction non souhaitée en fonction de ladite comparaison.

8. Procédé (50) selon la revendication 7, dans lequel lorsque les sens de marche sont différents, un déplacement non souhaité du véhicule est détecté, un compteur du nombre de tops roue vu par les capteurs d'odométrie est lancé, et on compare le nombre de tops roue (Top) compté avec une première valeur de seuil (S1), si le nombre de tops roues (Top) est supérieur à ladite première valeur de seuil (S1), on active le freinage du véhicule.

9. Procédé (50) selon la revendication 7 ou 8, dans lequel lorsqu'une différence de marche est détectée, on estime la distance parcourue basée sur l'odométrie et/ou les capteurs de perception du véhicule.

10. Procédé (50) selon la revendication 8 ou 9, dans lequel lorsque le freinage et activé, on maintient à l'arrêt du véhicule.

11. Procédé (50) selon l'une quelconque des revendications 8 à 10, dans lequel on incrémente un compteur (42) de mouvement non souhaité (rollback) configuré pour s'incrémenter à chaque fois qu'un mouvement non souhaité est détecté.

## Patentansprüche

1. Einparkhilfssystem (10) eines Kraftfahrzeugs, das das Einparken des Fahrzeugs von einem Verkehrsweg zu einem freien Stellplatz gestattet, wobei das Kraftfahrzeug ein System zur Detektion von Hindernissen, ein System zur Detektion von Stellplätzen, eine elektrische Hilfskraftlenkung, die im Einschlagwinkel steuerbar ist, einen Motor und ein Bremssystem, die im Drehmoment steuerbar sind, ein Automatikgetriebe oder ein "Shift-by-Wire"-System, mindestens einen Odometriesensor, einen Beschleunigungsmesser, ein Mittel zur Aktivierung einer Automatiksteuerfunktion und ein Fahrpedal (P) umfasst, das Einparkhilfssystem umfassend:
- ein Modul (12) zur Detektion der Aktivierung einer Phase des Suchens nach einem Stellplatz, das geeignet ist, zu überprüfen, dass der Fahrer auf ein Bedienorgan (14) gedrückt hat, um die Stellplatzsuchfunktion zu aktivieren,
- ein Modul (16) zur Überprüfung der Bedingungen zum Start des Einparkmanövers
- ein Modul (20) zur Überprüfung der Betätigung des Fahrpedals (P) und Modul (22) zur Durchführung des Einparkmanövers, das das Fahrzeug in Bewegung setzt und die Geschwindigkeit durch ein Geschwindigkeitsregelungsmodul (24) regelt, und
- eine Vorrichtung (30) zur Detektion und Verhinderung unerwünschter Bewegungen eines Kraftfahrzeugs umfassend ein Modul (34) zur Berechnung der Sollfahrtrichtung (Sm_soll) in Abhängigkeit von Informationen der Bewegungsbahn, den Informationen der Durchführung des Einparkmanövers sowie des eingelegten Gangs, ein Modul (36) zur Berechnung der Istfahrtrichtung (Sm_ist) basierend auf der Odometrie des Fahrzeugs und ein Modul (38) zur Detektion unerwünschter Bewegungen des Kraftfahrzeugs, das dazu ausgebildet ist, die gewollte Fahrtrichtung (Sm_soll) mit der Istfahrtrichtung (Sm_ist) zu vergleichen und in Abhängigkeit von dem Vergleich zu bestimmen, ob sich das Fahrzeug in einer unerwünschten Richtung bewegt.

2. Einparkhilfssystem (10) nach Anspruch 1, wobei, wenn die Fahrtrichtungen unterschiedlich sind, eine unerwünschte Bewegung des Fahrzeugs detektiert wird, ein Zähler der Anzahl von Räder-Tops gestartet wird, die von den Odometriesensoren erfasst wird, wobei die Vorrichtung einen Komparator umfasst, der dazu ausgebildet ist, die gezählte Anzahl von Räder-Tops (Top) mit einem ersten Schwellenwert zu vergleichen, wenn die Anzahl von Räder-Tops (Top) größer als der erste Schwellenwert (S1) ist, die Bremsung des Fahrzeugs aktiviert wird.

3. Einparkhilfssystem (10) nach Anspruch 2, umfassend ein Modul (40) zum Halten des Fahrzeugs im Stillstand, das dazu ausgebildet ist, eine Anfrage an das Bremssystem zu senden, um eine Haltefunktion zu aktivieren.

4. Einparkhilfssystem (10) nach Anspruch 2 oder 3, umfassend einen Zähler (42) unerwünschter Bewegung (rollback), der dazu ausgebildet ist, sich jedes Mal zu inkrementieren, wenn eine unerwünschte Bewegung detektiert wird.

5. Einparkhilfssystem (10) nach einem der Ansprüche 1 bis 4, wobei das Modul (22) zur Durchführung des Manövers das Fahrzeug in Bewegung setzt, wenn das Fahrpedal (P) betätigt wird.

6. Einparkhilfssystem (10) nach einem der Ansprüche 1 bis 5, wobei die Vorrichtung (30) zur Detektion und Verhinderung unerwünschter Bewegungen ein Modul (32) zur Überprüfung des Zustands des Geschwindigkeitsregelungsmoduls (24) umfasst, mit dem sichergestellt werden kann, dass sich das Fahrzeug tatsächlich halbautomatisch bewegt.

7. Einparkhilfsverfahren für ein Kraftfahrzeug, das das Einparken des Kraftfahrzeugs von einem Verkehrsweg zu einem freien Stellplatz gestattet, wobei das Einparkhilfsverfahren Folgendes umfasst:
- einen Schritt des Detektierens der Aktivierung einer Phase des Suchens nach einem Stellplatz, der geeignet ist, zu überprüfen, dass der Fahrer auf ein Bedienorgan gedrückt hat, um die Stellplatzsuchfunktion zu aktivieren,
- einen Schritt des Überprüfens der Bedingungen zum Start des Einparkmanövers
- einen Schritt des Überprüfens der Betätigung des Fahrpedals (P) und einen Schritt des Durchführens des Einparkmanövers, das das Fahrzeug in Bewegung setzt und die Geschwindigkeit durch einen Geschwindigkeitsregelungsschritt regelt, und
- ein Verfahren (50) zur Detektion und Verhinderung unerwünschter Bewegungen des Kraftfahrzeugs, wobei die Sollfahrtrichtung (Sm_soll) in Abhängigkeit von Informationen der Bewegungsbahn, den Informationen der Durchführung des Einparkmanövers sowie des eingelegten Gangs und die Istfahrtrichtung (Sm_ist) basierend auf der Odometrie des Fahrzeugs berechnet wird und unerwünschte Bewegungen des Kraftfahrzeugs detektiert werden, indem die gewollte Fahrtrichtung (Sm_soll) mit der Istfahrtrichtung (Sm_ist) verglichen wird, um in Abhängigkeit von dem Vergleich zu bestimmen, ob sich das Fahrzeug in einer unerwünschten Richtung bewegt.

8. Verfahren (50) nach Anspruch 7, wobei, wenn die Fahrtrichtungen unterschiedlich sind, eine unerwünschte Bewegung des Fahrzeugs detektiert wird, ein Zähler der Anzahl von Rad-Tops gestartet wird, die von den Odometriesensoren erfasst wird, und die gezählte Anzahl von Rad-Tops (Top) mit einem ersten Schwellenwert (S1) verglichen wird, wenn die Anzahl von Räder-Tops (Top) größer als der erste Schwellenwert (S1) ist, die Bremsung des Fahrzeugs aktiviert wird.

9. Verfahren (50) nach Anspruch 7 oder 8, wobei, wenn ein Fahrtunterschied detektiert wird, die zurückgelegte Strecke basierend auf der Odometrie und/oder den Erfassungssensoren des Fahrzeugs geschätzt wird.

10. Verfahren (50) nach Anspruch 8 oder 9, wobei, wenn die Bremsung aktiviert wird, das Fahrzeugs im Stillstand gehalten wird.

11. Verfahren (50) nach einem der Ansprüche 8 bis 10, wobei ein Zähler (42) unerwünschter Bewegung (rollback) inkrementiert wird, der dazu ausgebildet ist, sich jedes Mal zu inkrementieren, wenn eine unerwünschte Bewegung detektiert wird.

## Claims

1. System (10) for assisting in parking a motor vehicle, which makes it possible to park the vehicle from a traffic lane into a free parking space, said motor vehicle comprising a system for detecting obstacles, a system for detecting parking spaces, steering angle-controllable electric power steering, a torque-controllable engine and braking system, an automatic transmission or a system referred to as a shift-by-wire system, at least one odometrical sensor, an accelerometer, a means for activating an automatic control function and an accelerator pedal (P), the parking assistance system comprising:
- a module (12) for detecting the activation of a phase of searching for a parking space, which is able to check that the driver has pressed a control member (14) in order to activate the function of searching for a parking space,
- a module (16) for checking the conditions for starting the parking manoeuvre,
- a module (20) for checking whether the accelerator pedal (P) is depressed and a module (22) for performing the parking manoeuvre, which sets the vehicle in motion and regulates the speed by means of a speed regulation module (24), and
- a device (30) for detecting and inhibiting any undesired movement of a motor vehicle, comprising a module (34) for calculating the desired direction of travel (Sm_souhaité), depending on information about the trajectory, on the information about performing the parking manoeuvre, as well as on the gear engaged, a module (36) for calculating the actual direction of travel (Sm_reel) based on the odometry of the vehicle and a module (38) for detecting any undesired movement of the motor vehicle, configured to compare the desired direction of travel (Sm_souhaité) with the actual direction of travel (Sm_reel) and determine whether the vehicle is moving in an undesired direction depending on said comparison.

2. Parking assistance system (10) according to Claim 1, wherein, when the directions of travel are different, an undesired movement of the vehicle is detected, a counter of the number of wheel markers which is seen by the odometry sensors is launched, the device comprising a comparator configured to compare the number of wheel markers (Top) which is counted with a first threshold value and, if the number of wheel markers (Top) is greater than said first threshold value (S1), the braking of the vehicle is activated.

3. Parking assistance system (10) according to Claim 2, comprising a module (40) for holding the vehicle stationary, configured to send a request to the braking system to activate a holding function.

4. Parking assistance system (10) according to Claim 2 or 3, comprising a counter (42) of undesired motion (rollback), configured to increment each time an undesired motion is detected.

5. Parking assistance system (10) according to any one of Claims 1 to 4, wherein the module (22) for performing the manoeuvre sets the vehicle in motion when the accelerator pedal (P) is depressed.

6. Parking assistance system (10) according to any one of Claims 1 to 5, wherein the device (30) for detecting and inhibiting any undesired movement comprises a module (32) for checking the state of the speed regulation module (24) which makes it possible to ensure that the vehicle is indeed in semi-automated motion.

7. Method for assisting in parking a motor vehicle, which makes it possible to park the vehicle from a traffic lane into a free parking space, the parking assistance method comprising:
- a step of detecting the activation of a phase of searching for a parking space, which is able to check that the driver has pressed a control member in order to activate the function of searching for a parking space,
- a step of checking the conditions for starting the parking manoeuvre,
- a step of checking whether the accelerator pedal (P) is depressed and a step of performing the parking manoeuvre, which sets the vehicle in motion and regulates the speed by means of a speed regulation step, and
- a method (50) for detecting and inhibiting any undesired movement of the motor vehicle, wherein the desired direction of travel (Sm_souhaité) is calculated depending on information about the trajectory, on the information about performing the parking manoeuvre, as well as on the gear engaged, and the actual direction of travel (Sm_réel) is calculated, based on the odometry of the vehicle, and any undesired movement of the motor vehicle is detected by comparing the desired direction of travel (Sm_souhaité) with the actual direction of travel (Sm_réel) in order to determine whether the vehicle is moving in an undesired direction depending on said comparison.

8. Method (50) according to Claim 7, wherein, when the directions of travel are different, an undesired movement of the vehicle is detected, a counter of the number of wheel markers which is seen by the odometry sensors is launched, and the number of wheel markers (Top) which is counted is compared with a first threshold value (S1) and, if the number of wheel markers (Top) is greater than said first threshold value (S1), the braking of the vehicle is activated.

9. Method (50) according to Claim 7 or 8, wherein, when a difference in travel is detected, the distance covered is estimated based on the odometry and/or the perception sensors of the vehicle.

10. Method (50) according to Claim 8 or 9, wherein, when the braking is activated, the vehicle is held stationary.

11. Method (50) according to any one of Claims 8 to 10, wherein a counter (42) of undesired motion (rollback), configured to increment each time an undesired motion is detected, is incremented.
